Europäisches Patentamt

European Patent Office

Office européen des brevets

(11) Veröffentlichungsnummer: **0 190 575**
**A1**

(12) **EUROPÄISCHE PATENTANMELDUNG**

(21) Anmeldenummer: 86100515.5

(22) Anmeldetag: 16.01.86

(51) Int. Cl.4: **G06F 12/12** , G06F 12/08

(30) Priorität: 25.01.85 DE 3502547

(43) Veröffentlichungstag der Anmeldung:
13.08.86 Patentblatt 86/33

(84) Benannte Vertragsstaaten:
AT BE CH DE FR GB IT LI NL SE

(71) Anmelder: **Siemens Aktiengesellschaft Berlin und München**
**Wittelsbacherplatz 2**
**D-8000 München 2(DE)**

(72) Erfinder: **Kock, Ernst Josef, Dr.rer.nat., Dipl.-Phys.**
**Bahnsteg 1**
**D-8011 Kirchseeon(DE)**
Erfinder: **Schulte, Franz, Dr.rer.nat.,Dipl.-Phys.**
**Frühlingstrasse 39a**
**D-8011 Baldham(DE)**

(54) Verfahren und Anordnung zur Verringerung des Einflusses von Speicherfehlern auf in Cache-Speichern von Datenverarbeitungsanlagen gespeicherten Daten.

(57) Bei nach dem "copy-back"-Verfahren arbeitenden Cache-Speichern ist nach Änderung von Dateneinträgen im Fehlerfall kein Rückgriff auf eine Kopie im Arbeitsspeicher möglich. Da aber Speicherfehler im Cache-Speicher nicht auszuschließen sind, wird deren Einfluß auf geänderte Dateneinträge dadurch verringert, daß bei der Freigabe eines Speicherbereiches (z.B. BKO) die Auswahl nicht allein anhand des vorgegebenen Ersetzungsalgorithmus (z.B. LRU oder FIFO), sondern in Verbindung mit dem Änderungszustand (Bit W) der jeweils gleichzeitig zu prüfenden Speicherbereiche (z.B. BKO bis BK3) erfolgt. Dabei wird jeweils eine vorgegebene Anzahl (z.B. s = 2) von Speicherbereichen mit den entsprechend ranghöchsten Freigabeprioritäten (z.B. 0 und 1) überprüft und von diesen Speicherbereichen vorrangig jeweils der Speicherbereich mit ranghöchster Freigabepriorität ausgewählt, dessen Dateneintrag geändert ist.

Realisierung der Auswahlschaltung (W-BAW) durch ein logisches Verknüpfungsnetzwerk, das nach einer vom Erfindungsgedanken ableitbaren Verknüpfungsformel arbeitet.

FIG 3

EP 0 190 575 A1

Verfahren und Anordnung zur Verringerung des Einflusses von Speicherfehlern auf in Cache-Speichern von Datenverarbeitungsanlagen gespeicherten Daten.

Die Erfindung betrifft ein Verfahren und eine Anordnung zur Verringerung des Einflusses von Speicherfehlern auf in Cache-Speichern von Datenverarbeitungsanlagen gespeicherten Daten entsprechend dem Oberbegriff des Patentanspruchs 1.

Die Verwendung von Cache-Speichern in Datenverarbeitungsanlagen ist allgemein geläufig, z.B. durch Computing Surveys, Vol.14, No.3, Sept.82, Seiten 473 bis 530. Die beschränkte Speicherfähigkeit des Cache-Speichers im Vergleich zum Arbeitsspeicher zwingt häufig dazu, Daten im Cache-Speicher durch andere Daten aus dem Arbeitsspeicher zu ersetzen. Dazu verwendet man verschiedene Ersetzungsalgorithmen, z.B. genannte Literaturstelle, Seite 498 bis 500.

Der am häufigsten benutzte ist der LRU-Algorithmus - (least recently used), wonach jeweils der am längsten nicht benutzte Datenblock ersetzt wird, was anhand entsprechender Steuerbits je Datenblock ermittelt wird, die von einer LRU-Steuerung verwaltet werden.

Bei nach dem "copy back"-Verfahren arbeitenden Cache-Speichern besteht vor allem die Gefahr, daß durch Speicherfehler des Cache-Speichers beeinträchtigte Daten nicht einfach durch Rückgriff auf den Arbeitsspeicher ersetzt werden können, da sie zwischenzeitlich geändert worden sind. Die Daten werden daher in der Regel durch einen fehlerkorrigierenden Code geschützt - genannte Literaturstelle, Seite 501, Arschnitt 6 -, um eine ausreichende Funktionsfähigkeit zu gewährleisten. Solche fehlerkorrigierenden Codes stellen aber nicht in vollem Umfange sicher, daß auch alle erkennbaren Fehler korrigiert werden können. Zum Beispiel ist bei einer vorgegebenen Fehlerkorrekturmöglichkeit für Einzelfehler eine Reihe von Doppelfehlern erkennbar, aber nicht korrigierbar, so daß bei Vorliegen fehlerhaft geänderter Daten, die nicht korrigierbar sind, das laufende Programm abgebrochen und in eine Fehlerbehandlungsroutine übergeleitet werden muß.

Ob Daten geändert worden sind, wird in der Regel durch wenigstens ein zusätzliches Steuerbit je Datenblock angezeigt - z.B. genannte Literaturstelle, Seite 501, linke Spalte oben.

Aufgabe der Erfindung ist es, ausgehend von den eingangs genannten Verfahren und Anordnungen diese so zu gestalten, daß der Einfluß von Speicherfehlern verringert und dadurch die Verfügbarkeit der Datenverarbeitungsanlage ohne ins Gewicht fallende Einbuße an Leistungsfähigkeit gesteigert wird.

Diese Aufgabe wird gemäß der Erfindung durch die kennzeichnenden Merkmale des Patentanspruchs 1 gelöst.

Danach ist die Freigabe eines Speicherbereiches, z.B. für einen Datenblock, nicht allein vom Ersetzungsalgorithmus abhängig, sondern es wird zusätzlich berücksichtigt, ob der zugehörige Dateneintrag inzwischen geändert worden ist. Die Erfindung macht sich damit die Tatsache zunutze, daß ein frühes Auslagern geänderter Dateneinträge die Wahrscheinlichkeit verringert, daß auftretende Speicherfehler geänderte Dateneinträge erfassen und nicht korrigierbare Fehler verursachen können. Ein frühzeitiges Auslagern geänderter Dateneinträge erhöht also die Verfügbarkeit der Datenverarbeitungsanlage.

Damit jedoch die Leistungsfähigkeit infolge eines Absinkens der Trefferrate nicht beeinträchtigt wird, wird nur eine vorgegebene Anzahl von Speicherbereichen, die beispielsweise am längsten nicht benutzt worden sind (LRU-Prinzip) oder die am längsten im Cache-Speicher belegt sind (FIFO-Prinzip), auf das Vorliegen geänderter Dateneinträge überprüft und von diesen Speicherbereichen der als geändert gekennzeichnete Speicherbereich mit ranghöchster Freigabepriorität freigegeben. Nur wenn keiner der ermittelten Speicherbereiche mit den entsprechend ranghöchsten Freigabeprioritäten geänderte Daten enthält, wird der durch den Ersetzungsalgorithmus normalerweise freizugebende Speicherbereich mit ranghöchster Freigabepriorität freigegeben.

Bereits eine Erweiterung der auswählbaren Speicherbereiche von 1 auf 2 innerhalb einer Gruppe von Speicherbereichen bringt eine erhebliche Verringerung der geänderten Dateneinträge im Cache-Speicher mit sich.

Entsprechend arbeitende Anordnungen gemäß der Erfindung ergeben sich aus den Patentansprüchen 3 bis 5, wobein ausgehend von bekannten Anordnungen lediglich die Auswahlsteuerung durch ein entsprechend gestaltetes Verknüpfungsnetzwerk geändert ist.

Einzelheiten der Erfindung seien nachfolgend anhand eines in der Zeichnung dargestellten Ausführungsbeispiels näher erläutert. Im einzelnen zeigen:

FIG 1 ein Übersichtsschaltbild eines Cache-Speichers,

FIG 2 ein Blockschaltbild zur Erläuterung des Zusammenwirkens der Auswahlsteuerung gemäß der Erfindung mit der Steuerung für die Bildung der Prioritätssteuerbits als Teil der Speichersteuerung von FIG 1,

FIG 3 eine Schaltungsanordnung für die Auswahlsteuerung von FIG 2.

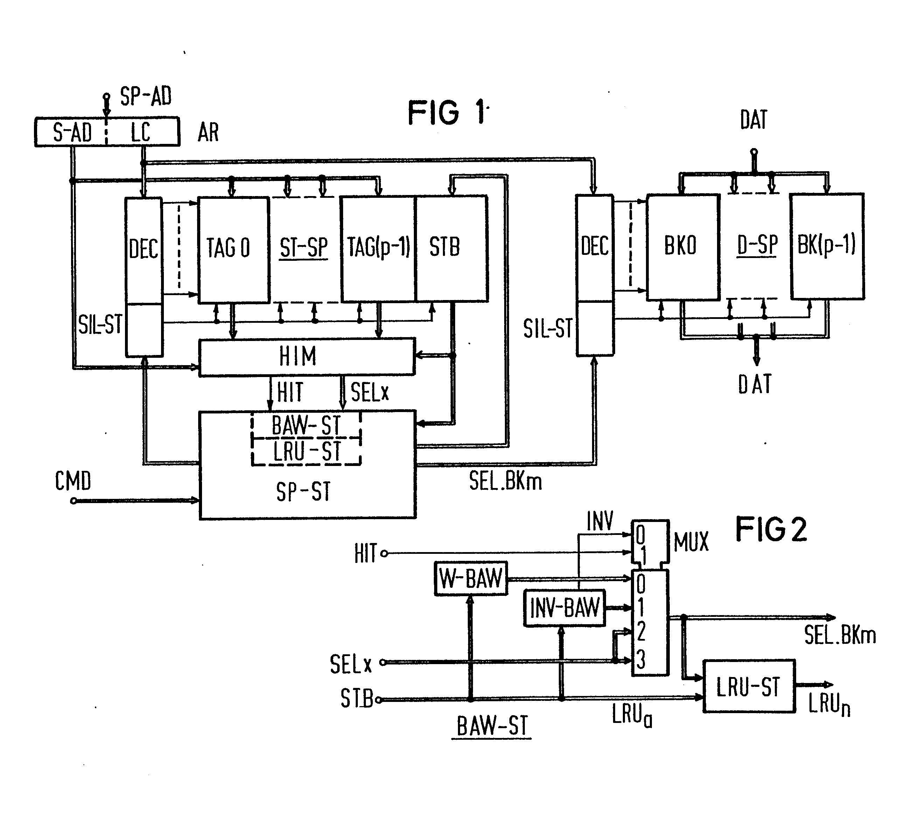

Das Übersichtsschaltbild von FIG 1 zeigt den prinzipiellen Aufbau eines Cache-Speichers in Anlehnung an die DE PS 30 12 205 oder die europäische Patentanmeldung 00 72 179.

Der Cache-Speicher besteht dementsprechend aus einem Datenspeicherteil D-SP und einem Steuerspeicherteil ST-SP. Der Datenspeicherteil D-SP weist p Speichersätze oder- bänke BKO bis BK(p-1) mit jeweils einer Vielzahl von Speicherbereichen auf, die in bekannter Weise über einen Auswahlschalter oder Decoder DEC auswählbar sind, wobei die zugehörige Schreib-/Lesesteuerung S/L-ST entscheidet, welche der Speicherbänke mit einem Schreib-oder Leseimpuls anzusteuern ist, damit nur einer der durch den Decoder DEC gleichzeitig ausgewählten Speicherbereiche Daten DAT liefern oder aufnehmen kann.

Der Steuersspeicherteil ST-SP ist ähnlich aufgebaut. Entsprechend den Speicherbänken für die Daten im Datenspeicherteil D-SP weist er Speicherbänke TAGO bis TAG-(p-1) für Andressen und eine zusätzliche gemeinsame Speicherbank STB für die Steuerkennzeichen auf.

Der Zugriff zum Cache-Speicher erfolgt in an sich bekannter Weise anhand der zugeführten und im Adressenregister AR zwischengespeicherten Speicheradresse SP-AD, die sich aus einer Teiladresse LC für die Auswahl der Speicherbereiche durch den Decoder DEC und einer Teiladresse S-AD zur Überprüfung der in den Speicherbänken TAGO bis TAG(p-1) enthaltenen Adressen durch die Steuerung H/M zusammensetzt, in Verbindung mit einem der übergeordneten Speichersteuerung SP-ST zugeführten Befehl CMD.

Bei jedem Speicherzugriff wird zunächst anhand des Steuerspeicherteils ST-SP überprüft, ob die Teiladresse S--AD in einem der durch die Teiladressen LC ausgewählten Speicherbereiche enthalten ist und ob der zugehörige Dateneintrag im Datenspeicherteil D-SP gültig ist. Liegt ein gültiger Eintrag vor, wird dies mit dem Signal HIT und der zugehörigen Bankkennzeichnung SELx der Speichersteuerung SP-ST mitgeteilt. Anhand der Bankkennzeichnung wird dann über die Schreib-/Lesesteuerung S/L-ST des Datenspeicherteiles D-SP der durch die Teiladresse LC gekennzeichnete Speicherbereich in der ausgewählten Bank für das Auslesen der darin enthaltenen Daten oder aber für die Eingabe der Daten wirksam geschaltet.

Weiterhin wird anhand der aus der Speicherbank STB des Steuerspeicherteils ST-SP u.a. gelesenen Steuerbits zur Kennzeichnung der Ersetzungsrangfolge LRUa durch die in der Speichersteuerung SP-ST enthaltene Steuerung LRU-ST die neue Rangfolge für die miteinander korrespondierenden Speicherbereiche aller Bänke BKO bis BK(p-1) ermittelt und die entsprechenden Bits zur' Kennzeichnung der neuen Ersetzungsrangfolge LRUn an entsprechender Stelle in die Bank STB des Steuerspeicherteils ST-SP wieder eingeschrieben.

Ergibt die Überprüfung der Adressenteile im Steuerspeicherteil ST-SP, daß kein entsprechender Dateneintrag vorliegt oder der gefundene Eintrag ungültig ist, dann muß in bekannter Weise zum nachgeschalteten, nicht gezeigten Arbeitsspeicher zugegriffen werden. Wenn durch den Ersetzungsalgorithmus ein Eintrag ausgewählt wird, der gültig und als geändert markiert ist, muß dieser Eintrag in den Arbeitsspeicher ausgelagert werden.

Welcher Eintrag ausgewählt wird, ermittelt in an sich bekannter Weise die Auswahlsteuerung BAW-ST anhand der Steuerbits für die Kennzeichnung der Ersetzungsrangfolge LRUa aus der Speicherbank STB des Steuerspeicherteils ST-SP. Mit dem Auswahlsignal SEL.BKm wird dann die ausgewählte Bank BKm im Datenspeicherteil D-SP angesteuert, und es werden die im zugehörigen Speicherbereich enthaltenen Daten DAT für die Übergabe an den Arbeitsspeicher gelesen. Außerdem werden die im Adressenregister AR bereitstehende Teiladresse S-AD und die Steuerbits für die Kennzeichnung der neuen Ersetzungsrangfolge LRUn in die ausgewählten Speicherbereiche des Steuerspeicherteils ST-SP eingetragen, und die zugehörigen Daten werden aus dem Arbeitsspeicher abgerufen und in den zugehörigen Speicherbereich im Datenspeicherteil D-SP eingetragen.

Das Zusammenwirken von Auswahlsteuerung BAW--ST und der Steuerung LRU-ST zeigt das Blockschaltbild von FIG 2.

Die Steuerung LRU-ST erhält zwei Eingangsvariable, nämlich die Auswahlkennzeichnung SEL. BKm für die ausgewählte Bank BKm und die Steuerbits zur Kennzeichnung der bestehenden Ersetzungsrangfolge LRUa, aus denen sich durch die Ansteuerung der ausgewählten Bank BKm ergebende neue Rangfolge LRUn ermittelt wird. Nicht gezeigt ist dabei die Ansteuerung der Steuerung LRU-ST beim Sperren einer Bank, um der gesperrten Bank in an sich bekannter Weise die niedrigste Freigabepriorität zuzuordnen, wie es beispielsweise durch IBM Technical Disclosure Bulletin, Vol.21, No 6, Nov.1978, Seite 2290 oder Vol.22, No. 6, Nov. 1979, S. 2317 bis 2318 bzw. durch die europäische Patentanmeldung 0061570 bekannt ist, so daß gesperrte Bänke gar nicht erst vom Ersetzungsalgorithmus der Steuerung LRU-ST erfaßt werden.

Die Ansteuerung der Steuerung LRU-ST durch die Adresse SEL.BKm für die ausgewählten Bank BKm erfolgt über einen Multiplexer MUX mit vier Eingängen 0 bis 3 für verschiedene Adressenquellen abhängig von den Steuersignalen HIT und INV.

Das Steuersignal HIT wird von der Steuerung H/M geliefert und meldet, ob ein gesuchter, nicht gesperrter Speichereintrag im Cache-Speicher bereits enthalten ist. Beim Steuersignal HIT = 1 entspricht die Kennzeichnung SEL.BKm der von der Steuerung H/M mitgeteilten Kennzeichnung SELx, und zwar unabhängig vom Steuersignal INV, so daß die Kennzeichnung SELx entweder über den Eingang 3 oder über den Eingang 4 des Multiplexers zum Ausgang durchgeschaltet wird.

Ist die Adressenüberprüfung dagegen negativ ausgefallen und liegt demzufolge das Steuersignal HIT = 0 vor, dann muß die freizugebende Bank ermittelt werden, d.h. es kann nicht auf eine vorliegende Kennzeichnung SELx der Steuerung H/M zurückgegriffen werden.

Die freizugebende Bank wird dann entweder in an sich bekannter Weise durch die Schaltung INV-BAW ermittelt, wenn mindestens ein ungültiger nicht gesperrter Eintrag vorliegt und demzufolge das Steuersignal INV = 1 wirksam wird, oder aber anhand der Schaltungsanordnung W-BAW, die gemäß der Erfindund auch eine erfolgte Änderung der betroffenen Speichereinträge berücksichtigt.

Die Schaltungsanordnung INV-BAW arbeitet z.B. nach der Bedingung

$$SEL.BKm = BKm.INV \wedge \overline{BKm.INH} \wedge \bigwedge_{n=0}^{n=m-1} (\overline{BKn.INV \vee BKn.INH})$$

was in einfacher Weise durch eine Verknüpfungsschaltung aus UND- und ODER-Gliedern sichergestellt werden kann, die die vorliegenden Steuerbits BKx.INV zur Kennzeichnung eines ungültigen bzw. gültigen Bankeintrages und BKx.INH zur Kennzeichnung eines gesperrten bzw. ungesperrten Bankeintrages aller Bänke BKx mit x = 0 bis (p-1) bei p Bänken überwachen. Es wird danach also immer eine Bank BKm ausgewählt, deren Eintrag ungültig, aber nicht gesperrt ist. Anhand dieser Bedingung ist auch das Steuersignal INV für die entsprechende Einstellung des Multiplexers MUX ncah der Beziehung

$$INV = \bigvee_{x=0}^{x=(p-1)} Bkx.INV \wedge \overline{BKx.INH}$$

mit einem einfachen zusätzlichen ODER-Glied ableitbar.

Das zusätzliche konjunktive Kettenglied der vorangehend genannten Auswahlbedingung stellt dabei sicher, daß bei mehreren ungültigen, aber nicht gesperrten Bankeinträgen eine eindeutige Auswahl getroffen werden kann, da abhängig von den Ordnungsziffern $x = 0$ bis $(p-1)$ für die einzelnen Bänke $BKx$ immer die Bank $BKm$ mit der niedrigsten Ordnungsziffer $m$ ausgewählt wird, für die die Bedingung $BKm.INV \wedge \overline{BKm.INH}$ erfüllt ist, während alle Bänke mit kleinerer Ordnungsziffer 0 bis m-1 entweder gültig oder gesperrt sind.

Die Schaltungsanordnung W-BAW kommt zum Tragen, wenn weder ein Signal $HIT = 1$ noch ein Signal $INV = 1$ vorliegt. In diesem Falle wird eine Freizugebende Bank abhängig vom vorgegebenen Ersetzungsalgorithmus ausgewählt. Jedoch ist es für die Erfindung von untergeordneter Bedeutung, nach welchem bekannten Ersetzungsalgorithmus die beiden Steuerungen W-BAW und LRU-St dabei arbeiten. Maßgebend ist vielmehr, daß der vorgegebene Ersetsungsalgorithmus durch die eine Änderung eines Eintrages kennzeichnenden Steuerbits beeinflußt wird.

Kennzeichnet man die Freigabepriorität der Bank $BKn$ ($n = 0,1,\cdots,p-1$) durch eine Dezimalzahl $r_n$ mit den Werten 0 bis $(p-1)$, wobei die Rangfolge vom Wert 0 bis zum Wert $(p-1)$ abfällt, und wählt man für die Darstellung der Dezimalzahlen die binäre Darstellung durch die Prioritätssteuerbits $Li$ mit $i = q-1$ bis 0 entsprechend $r_n = L-(q-1).2^{(q-1)} + L(q-2).2^{(q-2)} + \cdots + LO.2^0$, dann lassen sich die Freigabeprioritäten $BKn.r$ einer beliebigen Bank $BKn$ darstellen durch

$$BKn.0 \quad = \overline{BKn.L(q-1)} \wedge \overline{BKn.L(q-2)} \wedge \ldots \wedge \overline{BKn.LO}$$

$$Bkn.1 \quad = \overline{BKn.L(q-1)} \wedge \overline{BKn.L(q-2)} \wedge \ldots \wedge BKn.LO$$

$$\vdots$$

$$BKn.(p-1) = BKn.L(q-1) \wedge BKn.L(q-2) \wedge \ldots \wedge BKn.LO,$$

wobei $Bkn.r = 1$ gilt, wenn $r = r_n$ ist.

Bezeichnet man weiterhin das Änderungsbit W einer beliebigen Bank $BKn$ mit $BKn.W$, dann läßt sich entsprechend dem Erfindungsgedanken folgende allgemeine Verknüpfungsgleichung für die Auswahl der jeweils auszuwählenden Bank $BKm$ aufstellen:

$$SEL.\ BKm = \left[ BKm.0 \wedge \left( BKm.W \vee \bigwedge_{r=s-1}^{r=1} \bigvee_{\substack{n=p-1 \\ (n \neq m)}}^{n=0} BKn.r \wedge \overline{BKn.W} \right) \right]$$

$$\vee \left[ BKm.W \wedge \bigvee_{r=s-1}^{r=1} BKm.r \wedge \bigwedge_{t=r-1}^{t=0} \bigvee_{\substack{n=p-1 \\ (n \neq m)}}^{n=0} BKn.t \wedge \overline{BKn.W} \right]$$

Die Verknüpfungsgleichung besteht aus zwei Klammerausdrücken, die wahlweise bestimmend sind, und zwar der erste, wenn Bank $BKm.0 = 1$ ist, d.h. die betrachtete Bank $BKm$ die höchste Freigabepriorität $r = 0$ aufweist, und der zweite, wenn die im vorgegebenen Prioritätsbereich $r = s-1$ bis $r = 0-1$ liegende Bank $BKm$ nicht die höchste Freigabepriorität $r = 0$ aufweist, ihr Inhalt aber entsprechend $BKm.W = 1$ geändert ist.

Beide Alternativen sind von Randbedingungen abhängig. Diese bestehen für den ersten Klammerausdruck darin, daß entweder das zugehörige Änderungsbit $BKm.W = 1$ eine Änderung anzeigt oder aber daß alle übrigen Bänke $BKO$ bis $BK(p-1)$ mit Ausnahme der Bank $BKm$ selbst im restlichen vorgegebenen Prioritätsbereich $r = s-1$ bis $r = 1$ ebenfalls nicht geändert sind.

Für den zweiten Klammerausdruck ergibt sich die Randbedingung aus der Tatsache, daß ausgehend von der Priorität der auszuwählenden geänderten Bank BKm jeweils im restlichen höheren Prioritätsbereich t = r-1 bis t = 0 keine Bank mit höherer Freigabepriorität geänderte Daten enthält, also $\overline{BKn.W}$ = 1 ist.

Diese zunächst recht komplex erscheinende Formel führt in der Praxis zu verhältnismäßig einfachen Zusammenhängen, da von den disjunktiven Kettengliedern jeweils nur eins zum Tragen kommt.

Der Aufwand für eine die Verknüpfungsformel erfüllende Schaltungsanordnung ist umso geringer, je kleiner die Anzahl s der für die Auswahl zu berücksichtigenden Bänke ist. Für s = 2 ergibt sich aus der allgemeinen Verknüpfungsformel folgende vereinfachte Verknüpfungsformel

$$
SEL.BKm = \left[ BKm.0 \wedge \left( BKm.W \vee \bigvee_{\substack{n=p-1 \\ (n \neq m)}}^{n=0} BKn.1 \wedge \overline{BKn.W} \right) \right]
$$

$$
\vee \left[ BKm.W \wedge BKm.1 \wedge \bigvee_{\substack{n=p-1 \\ (n \neq m)}}^{n=0} BKn.0 \wedge \overline{BKn.W} \right] ,
$$

da neben der höchsten Freigabepriorit r = 0 nur noch die nächsthöchste Freigabepriorität r = 1 zu berücksichtigen ist. Die Anzahl der disjunktiven Kettenglieder BKn.x∧ $\overline{BKn.W}$ ist allein von der Anzahl p abhängig, so daß z.B. bei p = 8 wegen n ≠ m nur 6 UND-Glieder und bei p = 4 nur 3 UND-Glieder jeweils aufzuwenden sind.

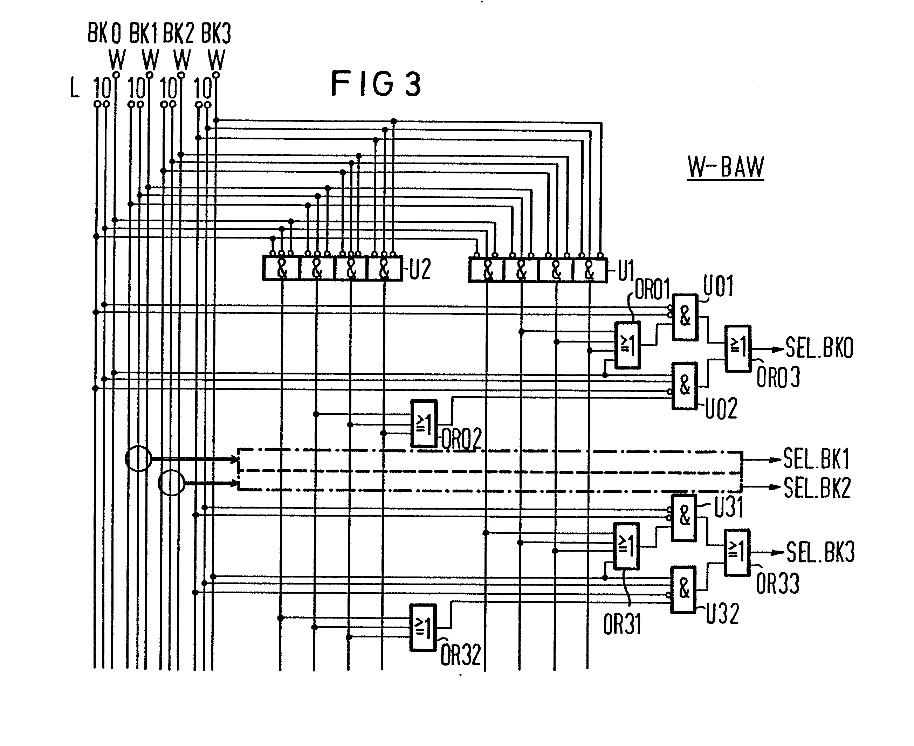

FIG 3 zeigt für den letzteren Fall eine entsprechende Schaltungsanordnung der Bankauswahlsteuerung BAW-ST. Im linken Teil der Figur sind für die 4 Bänke BKO bis BK3 entsprechend n = 0 bis 3 die Signalleitungen jeweils für das zugehörige Änderungsbit W und die beiden Prioritätsbits L1 und L0 dargestellt. Davon werden mit zwei UND-Glieder-Gruppen U1 und U2 für jede Bank Zwischensignale (BKn.1 ∧ $\overline{BKn.W}$) bzw. (BKn.0 ∧ $\overline{BKn.W}$) abgeleitet und über ODER-Glieder ORm1 bzw. ORm2 die beiden disjunktiven Ketten nachgebildet. In Verbindung damit bildet das UND-Glied Um1 zusammen mit BKm.W und BKm.0 den ersten Klammerausdruck und das UND-Glied Um2 mit BKm.1 und BKm.W den zweiten Klammerausdruck der zugehörigen Verknüpfungsformel nach. Beide dadurch gewonnenen Zwischensignale ergeben dann über das ODER-Glied ORm3 das Bankauswahlsignal SEL.BKm für die Bank BKm.

Bei vier Bänken BKO bis BK3 sind also insgesamt 4 bankindividuelle Teilverknüpfungsschaltungen - von denen jedoch nur zwei ausführlich dargestellt sind - erforderlich, die die Zwischensignale der gemeinsamen UND-Glieder-Gruppen U1 und U2 nutzen. Der Schaltungsaufwand ist also sehr klein, und bei einer Ausdehnung der Schaltung auf z.B. p = 8 Bänke würde sich bei ebenfalls s = 2 zu berücksichtigenden Bänken lediglich die Anzahl der UND-Glieder in den beiden UND-Glieder-Gruppen U1 und U2 verdoppeln und die ODER-Glieder ORm1 und ORm2 hätten entsprechend jeweils vier zusätzliche Signale zu verarbeiten.

Erhöht man dagegen die Anzahl s der zu berücksichtigenden Bänke, z.B. auf 4 bei insgesamt p = 8 Bänken, dann steigt allerdings entsprechend der allgemeinen Verknüpfungsformel der Aufwand stärker und die Schaltungsanordnung wird entsprechend komplexer in ihrem Aufbau, da im zweiten Klammerausdruck der allgemeinen Verknüpfungsformel das zweite

$$
\text{Glied} \bigvee_{r = s - 1}^{r = 1} \dots \text{als zusätzliche disjunktive Kettung}
$$

voll zum Tragen kommt.

Insgesamt aber führt bereits entsprechend s = 2 die Berücksichtigung einer zweiten Bank in Verbindung mit einer Änderung der zugehörigen Daten zu einer wesentlichen Verringerung der als geändert markierten Dateneinträge im Cache-Speicher, wobei sich die Trefferraten gegenüber einem den Änderungsstatus nicht berücksichtigenden Ersetzungsalgorithmus nur unwesentlich ändern, so daß die Prozessorleistung nahezu unverändert bleibt.

**Ansprüche**

1. Verfahren zur Verringerung des Einflusses von Speicherfehlern auf in Cache-Speichern von Datenverarbeitungsanlagen gespeicherten Daten, bei denen nur im Cache-Speicher gespeicherte Daten des Arbeitsspeichers geändert und durch ein Steuerbit (W) als geändert gekennzeichnet werden und bei denen geänderte Daten nur dann in den Arbeitsspeicher übertragen werden, wenn der zugehörige Speicherbereich im Cache-Speicher für andere Daten benötigt wird ("copy-back"-Verfahren), wobei die Auswahl des jeweils für neue Daten aus dem Arbeitsspeicher benötigten Speicherbereiches im Cache-Speicher durch einen vorgegebenen Ersetzungsalgorithmus (z.B. "LRU"-oder "FIFO"-Prinzip) anhand von weiteren Steuerbits (Li) gesteuert wird, **dadurch gekennzeichnet**, daß anhand des vorgegebenen Ersetzungsalgorithmus (z.B. LRU) von den insgesamt (z.B. p = 4) jeweils zu überwachenden Speicherbereichen (z.B. BKO bis BK3) anstelle des üblicherweise einen Speicherbereichs mit höchster Freigabepriorität (r = 0) eine vorgegebene Anzahl - (z.B. s = 2) von Speicherbereichen mit den entsprechend höchsten Freigabeprioritäten ermittelt wird, daß aus dieser Anzahl von Speicherbereichen jeweils derjenige (BKm) mit höchster Freigabepriorität ausgewählt wird, dessen Dateneintrag als geändert gekennzeichnet ist, und daß lediglich dann, wenn keiner dieser Speicherbereiche als geändert gekennzeichnet ist, der Speicherbereich mit der höchsten Freigabepriorität in herkömmlicher Weise ausgewählt wird.

2. Verfahren nach Anspruch 1, **dadurch gekennzeichnet,** daß jeweils zwei Speicherbereiche mit den beiden ranghöchsten Freigabeprioritäten (0 und 1) der Auswahlprüfung unterzogen werden.

3. Schaltungsanordnung zur Durchführung des Verfahrens nach Anspruch 1 oder 2, bestehend aus einer Auswahlsteuerung (BAW-ST) mit Einrichtungen zur Ermittlung des im Bedarfsfall freizugebenden Speicherbereichs (BKm) mit höchster Freigabepriorität (r = 0) anhand der durch die Prioritätssteuerbits (Li) vorgegebenen Rangfolge (LRUa) und einer Steuerung (LRU-ST) zur Ermittlung der mit jeder Ansteuerung sich ergebenden neuen Rangfolge (LRUn) abhängig vom jeweils ausgewählten Speicherbereich - (BKm), **dadurch gekennzeichnet** , daß die Auswahlsteuerung (BAW-ST) eine Auswahlschaltung (W-BAW) aufweist, die den jeweils auszuwählenden Speicherbereich (BKm) anhand der für eine Gruppe von Speicherbereichen (z.B. BKO bis BK(p-1)) jeweils vorliegenden Steuerbits zur Kennzeichnung einer Änderung (Bit W) und der Freigabepriorität (Bits Li) nach der Formel

$$SEL.BKm = \left[ BKm.0 \wedge \left( BKm.W \vee \bigwedge_{r=s-1}^{r=1} \bigvee_{\substack{n=p-1 \\ (n \neq m)}}^{n=0} BKn.r \wedge \overline{BKn.W} \right) \right] \cdot$$

$$\vee \left[ BKm.W \wedge \bigvee_{r=s-1}^{r=1} BKm.r \wedge \bigwedge_{t=r-1}^{t=0} \bigvee_{\substack{n=p-1 \\ (n \neq m)}}^{n=0} BKn.t \wedge \overline{BKn.W} \right]$$

ermittelt, worin die Prioritätssteuerbits Li mit i = (q-1), (q-2), ...,0 in binärer Darstellung Dezimalzahlen $r_n$ mit dem Wert 0 bis (p-1) in fallender Rangfolge kennzeichnen und entsprechend die Freigabeprioritäten eines Speicherbereiches BKn allgemein durch die Beziehungen

$$BKn.0 \quad = \overline{BKn.L(q-1)} \wedge \overline{BKn.L(q-2)} \wedge \ldots \wedge \overline{BKn.L0}$$
$$Bkn.1 \quad = \overline{BKn.L(q-1)} \wedge \overline{BKn.L(q-2)} \wedge \ldots \wedge BKn.L0$$
$$\vdots$$
$$BKn.(p-1) \quad = BKn.L(q-1) \wedge BKn.L(q-2) \wedge \ldots \wedge BKn.L0,$$

gegeben sind und BKn.r = 1 gilt, wenn r = $r_n$ ist, und worin BKn.W das Änderungsbit des Speicherbereiches BKn, p die Gesamtzahl der zu prüfenden Speicherbereiche BKn und s die Anzahl der auswählbaren Speicherbereiche bedeutet.

4. Schaltungsanordnung nach Anspruch 3, **dadurch gekennzeichnet,** daß die Anzahl (s) der von den insgesamt p Speicherbereichen (BKO bis BK(p-1)) auswählbaren Speicherbereiche gleich 2 ist und daß das die Auswahl treffende Verknüpfungsnetzwerk (W-BAW) den jeweils auszuwählenden Speicherbereich (BKm) nach der Beziehung

$$SEL.BKm = \left[ BKm.0 \wedge \left( BKm.W \vee \bigvee_{\substack{n=p-1 \\ (n \neq m)}}^{n=0} BKn.1 \wedge \overline{BKn.W} \right) \right]$$

$$\vee \left[ BKm.W \wedge BKm.1 \wedge \bigvee_{\substack{n=p-1 \\ (n \neq m)}}^{n=0} BKn.0 \wedge \overline{BKn.W} \right]$$

ermittelt.

5. Schaltungsanordnung nach Anspruch 3 oder 4, **gekennzeichnet** durch eine der Anzahl (z.B.$s = 2$) von auswählbaren Speicherbereichen (BKn) entsprechende Anzahl von gemeinsamen UND-Glieder-Gruppen (U1, U2) zur Überprüfung jeweils aller Speicherbereiche auf das Vorliegen ungeänderter Dateneinträge mit Bezug auf die infrage kommenden Freigabeprioritäten (z.B. 1 oder 0), deren Signalausgänge jeweils gruppenweise über den einzelnen Speicherbereichen (z.B. BK0) individuell zugeordnete ODER-Glieder (z.B. OR01 oder OR02) die entsprechend der gegebenen Verknüpfungsbeziehung zu bildenden Ergebnisse der disjunktiven Ketten

$$\left( z.B. \quad \bigvee_{\substack{n=p-1 \\ (n \neq m)}}^{n=0} BKn.r \wedge \overline{BKn.W} \right) \qquad ergeben.$$

FIG 1

FIG 2

FIG 3

W-BAW

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | IBM TECHNICAL DISCLOSURE BULLETIN, Band 15, Nr. 12, Mai 1973, Seiten 3803-3805, New York, US; D.K. CHIA et al.: "Replacement algorithm using priority class structure" * Seite 3804, Zeilen 17-45; Seite 3805, letzter Absatz * | 1 | G 06 F 12/12 G 06 F 12/08 |
| | --- | | |
| Y | US-A-3 588 839 (BELADY et al.) * Spalte 2, Zeile 70 - Spalte 3, Zeile 32; Spalte 3, Zeile 62 - Spalte 4, Zeile 13; Spalte 4, Zeilen 28-33,60-71 * | 1 | |
| | --- | | |
| Y | EP-A-0 062 175 (IBM) * Seite 3, letzter Absatz - Seite 4, Zeile 7; Seite 15, Zeilen 17-26 * | 1 | RECHERCHIERTE SACHGEBIETE (Int. Cl.4) |
| | --- | | |
| A | EP-A-0 009 412 (SPERRY RAND) * Seite 10, dritter Absatz * | 1,2 | G 06 F 12/12 G 06 F 12/08 |
| | --- | | |
| A | IEEE TRANSACTIONS ON COMPUTERS, Band C-32, Nr. 12, Dezember 1983, Seiten 1151-1159, IEEE, New York, US; O. BABAOGLU et al.: "Two-level replacement decisions in paging stores" | 1 | |
| | ----- | | |

Der vorliegende Recherchenbericht wurde für alle Patentansprüche erstellt.

| Recherchenort DEN HAAG | Abschlußdatum der Recherche 25-04-1986 | Prüfer LEDRUT P. |
|---|---|---|